(19) **Europäisches Patentamt**

**European Patent Office**

**Office européen des brevets**

(11) Publication number: **0 411 000 B1**

(12) **EUROPEAN PATENT SPECIFICATION**

(45) Date of publication of patent specification: **09.06.93** (51) Int. Cl.5: **F04C 18/16**

(21) Application number: **89904637.9**

(22) Date of filing: **04.04.89**

(86) International application number:
**PCT/SE89/00173**

(87) International publication number:
**WO 89/09881 (19.10.89 89/25)**

(54) **A METHOD FOR MANUFACTURING SCREW ROTORS.**

(30) Priority: **07.04.88 SE 8801276**

(43) Date of publication of application:
**06.02.91 Bulletin 91/06**

(45) Publication of the grant of the patent:
**09.06.93 Bulletin 93/23**

(84) Designated Contracting States:
**BE DE FR GB IT**

(56) References cited:
**DE-A- 1 944 942**
**US-A- 2 519 588**
**US-A- 3 841 805**

**PATENT ABSTRACTS OF JAPAN, vol. 7, no. 287 (M264), abstract of JP 57-42743, 24-09-1983**

(73) Proprietor: **SVENSKA ROTOR MASKINER AB**
**P.O. Box 15085**
**S-104 65 Stockholm(SE)**

(72) Inventor: **TIMUSKA, Karlis**
**Kälvestavägen 44**
**S-163 54 Spanga(SE)**

(74) Representative: **Waldinger, Ake et al**
**Svenska Rotor Maskiner AB Box 15085**
**S-104 65 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.6/3.3. 1)

Description

The present invention relates to a method for manufacturing helical screw rotors in accordance with the preamble of claim 1. The invention also relates to rotors manufactured in accordance with the method.

Normally, helical screw rotors are machined from solid metal blanks. Moreover, the rotors have a complicated geometric shape, which places great demand on accuracy in manufacture. Machining of the rotors from solid rotor blanks also involves the removal of large quantities of material from the blank. All of which results in long manufacturing times and high production costs.

Consequently, there has long been a demand for a simpler method for the manufacture of helical screw rotors, without the need to observe such high precision in manufacture, such that rotors of this kind can be produced in large numbers at reasonable cost.

Swedish Patent Application No. 8603720-7 and PCT/SE87/00397 teach a number of known methods for the manufacture of helical screw rotors, in which manufacture is simplified by moulding a plastic surface layer onto a plastic or a metal rotor body, which in turn is mounted on a metal shaft. These known methods are based on the concept of first producing a rotor body with no particular attention to measurement accuracies, and then moulding onto the body a surface layer formed to exact measurements. The desired result is normally achieved, when the rotor body is made of metal. Although plastic-moulded rotor bodies represent a considerable simplification in the manufacture of such bodies, subsequent shrinkage of the plastics material creates drawbacks which are not found when casting or moulding other kinds of plastic objects, where subsequent shrinkage of the plastics material can be anticipated and compensated for. The particular difficulties which manifest when moulding helical screw rotors relate to the helically extending cams, which as a result of the shrinkage become distorted in a manner which cannot readily be calculated prior to manufacture. This distortion changes the pitch of the cams in the vicinity of the ends thereof.

The effect of this shrinkage-induced distortion can be eliminated in some cases, by imparting to the thin-wall lands or threads of female rotors a degree of elasticity which will allow the lands to be deformed elastically in operation. This feature will also afford certain advantages, as reported in PCT/SE86/00109.

Another solution must be found, however, in the case of male rotors and female rotors of larger land-wall thicknesses.

This solution is provided by the present invention, according to which the rotor body is moulded, injection moulded, etc., from several layers of solidifying material, suitably a material composite, such as to allow especially shrinkage-induced distortion of the lands or threads to be eliminated, by application of the outer layer. The degree of distortion and measurement deviations which remain despite moulding the rotor body in several layers will not be so great as to prevent the distortion and measurement deviations from being eliminated, by moulding the outer layer of polymer-based material onto the rotor body, which layer can then be made relatively thin and consequently will have negligible shrinkage.

The rotor body can be moulded in accordance with one of a number of different methods, including sintering, using many different kinds of material, as defined in claims 2 to 7. All of the layers of the rotor body will preferably be made from a polymer-based material, suitably a material composite, i.e. a material reinforced with fibres in accordance with known techniques.

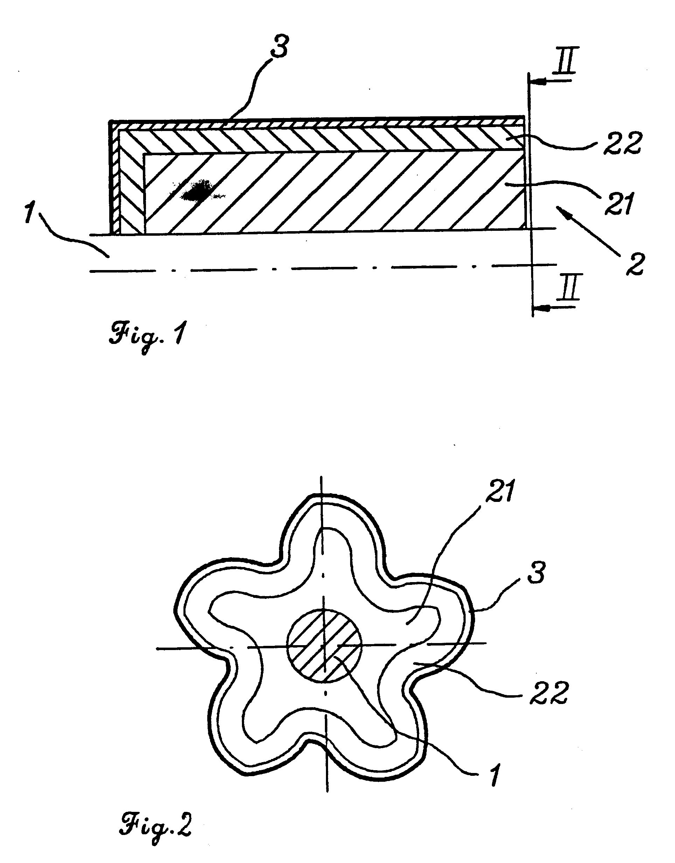

The invention will now be described in more detail with reference to an exemplifying embodiment thereof illustrated in the accompanying drawing, in which Figure 1 illustrates in axial section the top half of a rotor manufactured in accordance with the invention, and Figure 2 is a sectional view taken on the line II-II in Figure 1.

The illustrated rotor, which is a male rotor, includes a shaft 1, which may be made of steel or a reinforced plastics material of extremely high bending strength, and a rotor body 2 which has moulded thereon an outer layer 3 of polymer-based material. The illustrated rotor body 2 comprises two body layers 21, 22 of polymer-based material, of which the innermost body layer 21 is somewhat thicker than the outermost layer 22. Shrinkage of the body layer 21 shall have terminated, before moulding of the outer layer 22 is complete. Similarly, shrinkage of the outermost of said two body layers shall have terminated, prior to moulding of the thin outer layer 3 being completed, therewith to achieve the highest possible measurement accuracy and the least possible distortion of the rotor lands, in the simplest possible manner.

To ensure uniform solidification of the rotor body, the thickness of each layer will preferably be as uniform as possible. The shaft embodiment with helical lands or threads described in the aforesaid PCT/SE86/00109 can be used to this end, and when different materials are used, the thermal coefficient of expansion of the layers should be so selected in respect of the material of adjacent layers and the material of the shaft and the outer layer 3 as to ensure that the smallest possible differences in thermal expansion are obtained.

In the case of the preferred embodiment, the shaft 1 is made of steel which has a thermal coefficient of expansion of $\alpha = 12 \times 10^{-6}$ m/m/°K, the layer 21 is made of polyetherimide with a 30 % glass-reinforcement. ULTEM 2300® (General Electric) with a density of 1.51 g/cm$^3$, a bending modulus of 9000 N/mm$^2$, $\alpha = 20 \times 10^{-6}$ m/m/°K, the layer 22 is made of a polyetherimide ULTEM 2100 ® with a 10 % glass-reinforcement, density 1.34, bending modulus 4500 N/mm$^2$, and $\alpha = 32 \times 10^{-6}$. The outer layer 3 consists solely of polytetraflouroethene plastic (Teflon®) and varies in thickness from about 1/100 mm to 1-2 mm depending on the extent of subsequent shrinkage of the rotor body, prior to moulding of the outer layer 3 being completed.

It will be understood that the invention is not restricted to the described and illustrated embodiment thereof and that many modifications are possible within the scope of the invention as defined in the following claims. For instance, the various layers may include particles of metal and or ceramic material, in addition to reinforcement fibres of greater or smaller lengths. At least one of the outer layers of the rotor body may comprise a porous plastic material, in which case the density will preferably increase in a direction towards the two faces of the layer.

## Claims

1. A method for manufacturing rotors which have helical lands with intermediate grooves and which comprise a carrier shaft (1) having a rotor body (2) mounted thereon, and a thin-walled integral outer layer (3) of polymer-based material applied with great measurement accuracy on the rotor body, said rotors being intended for use in screw rotor machines, **characterized** in that the rotor body (2) is manufactured by forming the body as consecutive body layers (21, 22) of solidifying material which layers have helical lands with intermediate grooves, suitably a material composite, by casting, moulding, jet moulding or likewise, such as to enable shrinkage-induced distortion of the lands caused by the solidification of the material to be eliminated by application of the outer layer (3) having a wall-thickness compensating for the deviation of the rotor body (2) after solidification from the intended form of the rotor.

2. A method according to claim 1, **characterized** by producing at least one of the layers of the rotor body by sintering.

3. A method according to claim 1 or claim 2, **characterized** by forming at least one of the layers of the rotor body from a porous material and by giving the layer a density which increases in the directions towards the two faces of the layer.

4. A method according to any one of claims 1 to 3, **characterized** in that the thickness of the layers of the rotor body decreases outwardly from within.

5. A method according to any one of claims 1 to 4, **characterized** in that the outer layer is given a smaller thickness than any of the layers of the rotor body.

## Patentansprüche

1. Verfahren zum Herstellen von Schraubenrotoren, die schraubenförmige Rippen mit zwischenliegenden Nuten haben und eine Tragwelle (1) mit einem darauf sitzenden Rotorkörper (2) sowie eine dünnwandige, einstückig verbundene Außenschicht (3) aus einem Material auf der Grundlage von Polymeren aufweist, welche mit großer Maßgenauigkeit auf den Rotorkörper aufgebracht ist, und die zur Verwendung in Schraubenrotormaschinen bestimmt sind **dadurch gekennzeichnet**, daß der Rotorkörper (2) durch Bildung aufeinanderfolgender Körperschichten (21, 22), welche schraubenförmige Rippen mit zwischenliegenden Nuten haben, aus sich verfestigendem Material, vorzugsweise einem Verbundwerkstoff, durch Gießen, Formen, Spritzgießen od. dgl. erzeugt wird, so daß ein durch die bei der Verfestigung eintretende Schrumpfung verursachter Verzug der Rippen vermeidbar ist durch Aufbringung der Außenschicht (3) mit einer Wanddicke, welche die Abweichung des Rotorkörpers (2) nach der Verfestigung von der vorgesehenen Form des Rotors ausgleicht.

2. Verfahren nach Anspruch 1, **dadurch gekennzeichnet**, daß wenigstens eine der Schichten des Rotorkörpers durch Sintern erzeugt wird.

3. Verfahren nach Anspruch 1 oder 2, **dadurch gekennzeichnet**, daß wenigstens eine der Schichten des Rotorkörpers aus einem porösen Material geformt wird und der Schicht eine Dichte gegeben wird, die zu den beiden Endflächen der Schicht hin zunimmt.

4. Verfahren nach einem der Ansprüche 1 bis 3, **dadurch gekennzeichnet**, daß die Dicke der Schichten des Rotorkörpers von innen nach außen abnimmt.

5.  Verfahren nach einem der Ansprüche 1 bis 4, **dadurch gekennzeichnet**, daß die Außenschicht mit einer geringeren Dicke ausgeführt wird als irgendeine der Schichten des Rotorkörpers.

**Revendications**

1.  Procédé de fabrication de rotors qui ont des plages hélicoïdales avec des rainures intermédiaires et qui comprennent un arbre porteur (1) sur lequel est monté un corps de rotor (2) et une couche externe intégrante à paroi mince (3) en une matière à base de polymère appliquée avec une grande précision de mesure sur le corps du rotor, lesdits rotors étant destinés à être utilisés dans des machines à rotor à vis, caractérisé en ce que le corps de rotor (2) est fabriqué à partir de couches successives (21, 22) de matière à pouvoir solidifiant qui présentent des plages hélicoïdales avec des rainures intermédiaires, commodément une matière composite, par coulée, moulage, moulage par injection ou un procédé analogue, de manière à pouvoir éliminer la distorsion des plages due à la contraction provoquée par la solidification de la matière par application d'une couche externe (3) présentant une épaisseur de paroi qui compense la différence de forme du corps du rotor (2) après solidification vis-à-vis de sa forme prévue.

2.  Procédé selon la revendication 1, caractérisé en ce que l'on produit au moins une des couches du corps du rotor par frittage.

3.  Procédé selon la revendication 1 ou 2, caractérisé en ce que l'on forme au moins l'une des couches du corps du rotor à partir d'une matière poreuse et l'on donne, à la couche une densité qui augmente dans les directions venant aux deux faces de la couche.

4.  Procédé selon l'une quelconque des revendications 1 à 3, caractérisé en ce que l'épaisseur des couches du corps du rotor diminue de l'intérieur vers l'extérieur.

5.  Procédé selon l'une quelconque des revendications 1 à 4, caractérisé en ce que la couche externe a une épaisseur plus faible que celle de l'une quelconque des couches du corps du rotor.

Fig. 1

Fig. 2